# EUROPEAN PATENT APPLICATION

(11) **EP 3 168 792 A1**
(43) Date of publication of application: **17.05.2017**
(21) Application number: 15194315.6
(22) Date of filing: 12.11.2015
(51) Int. Cl.: G06Q 10/00

(54) **METHOD AND SYSTEM FOR AUTOMATIC DATA PROCESSING IN THE MAINTENANCE OF ENGINE SYSTEMS**

(71) Applicant: Rolls-Royce Deutschland Ltd & Co KG, 15827 Blankenfelde-Mahlow (DE)
(72) Inventor: GENNOTTE, Mark, 15834 Rangsdorf (DE)
(74) Representative: Maikowski & Ninnemann Patentanwälte Partnerschaft mbB

(57) **Abstract**

The invention is related to a method for automatic data processing in engine systems maintenance, in particular aircraft engine maintenance, comprising
a) scanning engine component information (I) from an information carrier (2) coupled to an engine component (1) with an image scanner device (11) of a mobile device (10), in particular a smartphone (10) or a tablet computer (10),
b) processing the engine component information (I) in a computer system (20) connected at least intermittently with the mobile device (10) and / or in a computer system (20) integrated with the mobile device (10),
c) automatically generating at least one event (E) in dependence of the engine component information (I), in particular at least one order event for the engine component (1) and
d) the computer system (20) automatically sending at least one an information token (T) to the mobile device (10) in dependence of the generation of the at least one event (E), in particular at least one confirmation token (T) of the at least one order event (E).

It is also related to a system.

## Description

The invention relates to a method for automatic data processing in the maintenance of engine systems with the features of claim 1 and a system for automatic data processing in the maintenance of engine systems with the features of claim 13.

Engine systems, in particular aircraft engines involve complex machines which are operated around the world. The term engine systems is applicable to internal combustion engines and non-internal combustion engines. Particular aircraft engine might be present in many locations within a rather short time period making it difficult to organize engine maintenance in the field. Maintenance in this context comprises the regular maintenance according to the specifications of the manufacturer as well as maintenance due to a possible or imminent failure requiring the replacement of an engine component. But the complexity of engine maintenance is not only limited to aircraft engines.

Wind engines or nuclear systems require regular maintenance which can involve high cost and / or large engine components. Nuclear engine systems, such e.g. in submarines, also require conformance with regulations.

Therefore, maintenance is broadly understood as any work required on an engine system and / or an engine component after the engine assembly was firstly completed by the manufacturer.

Known systems and methods to identify components, but not specific to aircraft engine components are described in US 2013/0211939 A1 or US 2015/0025984 A1.

Therefore methods and systems with an improved maintenance engine systems are required.

A method for the automatic data processing in engine system maintenance, in particular aircraft engines, with the features of claim 1 addressing this issue includes the following steps:
a) Scanning of engine component information from an information carrier coupled to an engine component with an image scanner device of a mobile device, in particular a smartphone or a tablet computer. The engine component information allows the identification of an engine component which is then used in the further processing. The engine component can be e.g. a single device but also an assembly (e.g. a complex engine component) comprising a plurality of parts. It is also possible to scan more than one engine component at the same time.
b) Processing the engine component information in a computer system connected at least intermittently with the mobile device and / or in a computer system integrated with the mobile device. The scanned information regarding the engine component is then further processed by the computer system. The computer system can be integrated with the mobile device and / or it can be accessed via a data transfer line, e.g. a wireless data connection which can be established from a smartphone. In the latter case, the mobile device would not always be connected to the computer system. It is also possible that different parts of the data processing are executed by different parts of the computer system which can also include cloud components.
c) The engine component information is processed in the computer system automatically generating at least one event in dependence of the engine component information. In particular, an order event for the engine component is generated. The event comprises e.g. a dataset which defines a task which is supposed to be executed (in particularly automatic) by the recipient of the event dataset. One example for an event would be an order for a replacement component for the engine component. Other examples could be the automated generation of return labels, the automated generation of warranty requests and / or the automated generation of purchase orders.
d) Then, the computer system automatically sends an information token to the mobile device in dependence of the generation of the at least one event, in particular a confirmation token of the at least one order event. Upon receiving the token, the user of the mobile device, e.g. an engine mechanic, knows that the request was processed.

In one embodiment of the method a central computer system checks upon receiving the event the availability of the engine component and automatically sends availability and / or tracking data to the computer system and / or the mobile device. For the initiator of the event, i.e. the user of the mobile device, it is important to know if and when the engine component will be available. By providing and processing availability and / or tracking data it is e.g. possible to generate a baseline for component supplier performance and also to assess the performance suppliers.

In a further embodiment, the central computer system automatically generates and / or sends maintenance data to the computer system and / or the mobile device, in particular about at least one engine component which might require replacement within a predetermined time period in the future. The maintenance data can be provided within the method for engine components in general, i.e. also for engine parts which are not coupled with an event. It is e.g. possible that the central computer system will recommend that not only the requested engine component is replaced but other, technically related engine components as well. The central computer system can e.g. take into account the maintenance history of the engine, so it can predict, when the next maintenance will be due. It might be more economical to replace a number of components in one instance than to replace the components at different times. It is also possible that regulatory requirements (e.g. for nuclear systems or aircraft engines) require the replacement of certain components. The databases of the central computer system can provide this information so that upcoming replacements required by regulations can be made at an earlier time when some other part is already about to be replaced. This way it is possible to reduce maintenance costs by lumping together maintenance tasks.

The availability and / or tracking data and / or the maintenance data can, in one embodiment, automatically be generated in dependence of the geographic location of the mobile device. Due to the communication process it is generally known from which location the request (i.e. the event) is generated. Information, e.g. from manuals, can be provided in suitable language for the location. The information can be displayed e.g. on the smartphone or the tablet computer. Dependent on the location or a preferred setting in the computer system and / or central computer system, some or all information will be displayed in a preset (e.g. preferred) language. The manual can e.g. include graphical information in 3D about the engine component making it easier to execute the maintenance job. Due to the scanning of the component information the computer systems automatically know which part of the manual might be most useful in a particular maintenance situation.

It is also possible that information related to the event is automatically forwarded to a fleet management, a regulatory system and / or engine health monitoring system, a billing system and / or statistically processed in the central computer system. Through this embodiment of the method, a large amount of engine and / or component data is gathered over time. This data can form part of an input to a fleet management and / or engine health monitoring system. The first system is e.g. used to assess the maintenance schedule of a plurality of engines in the fleet of an operator. The second system can be used to manage the schedule of individual engines. A coupling with the billing system simplifies the commercial handling of orders. Warranty information, fleet behavior, audit information, environmental information (e.g. temperature, humidity, air pressure), quality control information and / or supply chain information can automatically be included. Since complex engine systems are increasingly subject to regulation, the event might also trigger an information to a regulatory systems. This would then be informed that certain components are worked upon or are being replaced. Over time the regulatory system can gather information about the regulated engine systems so that statistic and safety analysis would be available. These systems can be used individually or in combination.

The method can use information carrier comprising a two-dimensional code, in particular a QR-Code or DataMatrix-Code, a RFID-transponder and / or a barcode. All these markings can be used to identify engine components.

To accelerate the process, the event automatically triggers the printing of a transport label for transporting the engine component to a predetermined location and / or automatically triggers a transport order of the engine component to a predetermined location, in particular in dependence of a cost and / or route optimizer. Since the component information already comprises or points to the relevant information, the automatic label creation does help in shipping an engine component. Since a logistics service provider can have access to this data, the material handling process will be simplified.

In a further embodiment the at least one event automatically triggers at least one process in the supply chain management for the engine component and / or a statistical analysis. The term supply chain has to be understood in a broad way involving all possible steps in providing engine components. The scanned engine component information can be used with other technical and / or commercial data available on the central computer system, in particular by gathering the technical and / or commercial data at least in part through the scanning of the engine component data. The mobile device and the scanning are therefore means for generating a database which can be used in many ways (e.g. auditing of regulatory requirements, safety analysis, economic performance analysis etc.)

Furthermore, it is possible that the event automatically triggers an entry in a logbook of the engine system, in particular an aircraft and / or the aircraft engine, in particular with details about a defective engine component and / or a replaced engine component. The logbook can be an electronic version stored on a computer and / or a cloud based logbook.

In another embodiment of the method the engine component information is associated with code data which can only be processed by an authorized scanner device and / or mobile device. The code data can e.g. only be decrypted by mobile devices running a program (in particular an App) which is authorized by the respective engine manufacturer. Only customers under contract e.g. with a manufacturer will be able to obtain e.g. Apps and are able to decode scanned data.

It is also possible that the engine component information is associated with a 3D-printing dataset and the generated at least one event automatically triggers a 3D-printing process. The engine component information might e.g. comprise a link to a database with 3D-printing data files. Those data files can be forwarded to a 3D-printer to print the component (or related tool for the component) which has been scanned in the engine. The printing could take place on site or remotely, so that the at least one event would also trigger the transport of the printed component. Given the range of available polymer and metal printing material, a wide range of engine parts could be printed.

A system for automatic data processing in engine maintenance, in particular aircraft maintenance, according to claim 13 comprises the following devices:
a) A mobile device, in particular a smartphone or a tablet computer, with a scanner device for scanning engine component information from an information carrier coupled to an engine component.
b) A computer system for processing the engine component information, the computer system connectable at least intermittently with the mobile device and / or integrated with the mobile device.
c) An event generation unit for automatically generating an event, in particular an order event for the engine component in dependence of processing the engine component information.
d) An information token generation unit for generating an information token about the event to be sent to the mobile device, in particular as a confirmation of the order event.

An embodiment of the system comprises a mobile device with a GPS unit for geographically locating the mobile device.

In a further embodiment a central computer system which can be coupled to the mobile device is coupled with a database handling maintenance data, a fleet management and / or engine health monitoring system, a regulatory system, a billing system and / or a database for statistic data processing related to events. Due to the gathering of engine maintenance related events, the system gathers a large amount of data which allows the assessment of the maintenance process but also the status of individual engines and fleets of engines.

In one embodiment the scanner device and / or the mobile device comprise a decoding unit to decode code data associated with the engine component information. This assures that only a pre-approved scanner can scan and further process the data obtained from an engine component.

Embodiments of the invention are shown in the figures, where
Fig. 1 shows a schematic view of an embodiment of a method and system for data processing in the maintenance of aircraft engines;
Fig. 2 shows a variation the embodiment shown in Fig. 1;
Fig. 3 shows a variation of the embodiment shown in Fig. 1 in which the mobile device and the computer system are integrated.

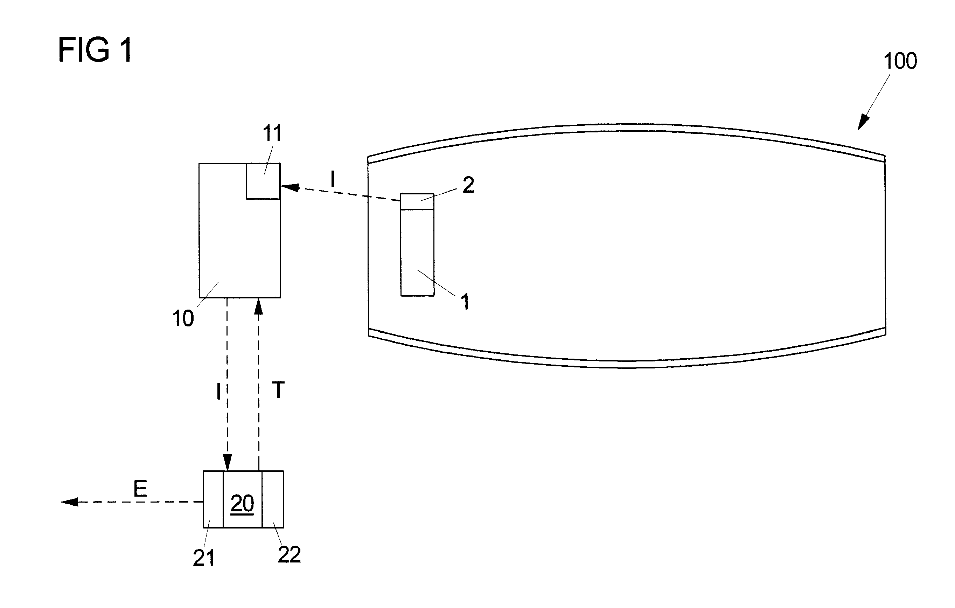

In Fig. 1 an embodiment of the method and the system for data processing in aircraft maintenance is described. An aircraft engine 100 is just one example of an engine system which can be handled by embodiments of the method and embodiments of the data processing systems. An engine system as described herein is a technical system or a machine which requires maintenance. Some exemplary embodiments other than aircraft engines 100 will be described below.

The current description assumes that an aircraft engine 100 is somewhere subjected to a maintenance process, e.g. because one engine component 1 needs to be replaced under the normal maintenance schedule or because it needs to be replaced because of some malfunction or imminent and / or predicted malfunction.

The embodiment of the method comprises four steps to which further optional steps or features can be added.

In a first step, engine component information I on an information carrier 2 is scanned with scanner device 11. The information carrier 2 is coupled to the aircraft engine component 1 (e.g. a pump, a valve, a blade, a vane, a screw, a bolt, an electronic part etc.). This means that the information carrier 2 can e.g. be physically attached or engraved (e.g. by laser marking) with the engine component 1. But it is also possible that the engine component 1 is coupled with the information carrier 2 through a list, e.g. a printed list. The information carrier (e.g. a QR-Code) can be listed and scanned, so that the engine component 1 is logically coupled with the information carrier 2. In any case the information carrier 2 provides e.g. a part number or some other identification of the engine component 1. The engine component 1 can be one individual piece of equipment or a complex assembly comprising a plurality of equipment parts.

The information carrier 2 can e.g. be a two-dimensional code such as a QR-Code or a data matrix code. In other embodiments a RFID tag or a one dimensional code such as a barcode can be used. The information carrier 2 can be attached by any means to the engine component 1. In particular, a sticker, date plate, an etched marking or a laser marking can be used as information carrier 2.

The information carrier data 2 can also be printed on accompanying paperwork or it can be displayed in an electronic logbook. This is in particular important on legacy products which do not have any QR/Data matric code. The printing of the information carrier data 2 on paper or in the logbook are examples how the information carrier 2 can be coupled to an aircraft engine component 1 without being physical present on the aircraft engine component 1 itself.

The scanner device 11 is coupled to a mobile device 10, in particular a smartphone 10 or a tablet computer 10. A smartphone 10 or a tablet computer 10 is understood to have a display for providing information to the user, a communication unit, an input device (e.g. keyboard), a camera, a memory for data and / or software and a built-in data processing device which can work with the data and the software. In case of the smartphone 10 or tablet computer 10, the scanner device 11 can be the camera which is built into the smartphone 10 or the tablet computer 10. It is generally known that smartphones and tablet computers 10 can e.g. scan and process QR-Codes with software stored on the smartphones 10 or tablet computers. If e.g. no smartphone 10 is used, a dedicated mobile device 10 for scanning and processing the information carrier 2 can be used, e.g. scanners as commonly used in warehouses, overhaul/repair shops to book in parts.

The QR (2D coding) product labelling code has become the most commonly used within the aircraft engine business. It has various applications within the industry: e.g. product tracking, item identification, time tracking, document management, general marketing, consumer advertising and much more. The QR coding has become very popular due to its fast readability and greater data storage capacity compared to the standard UPC (conventional) barcodes. Within the aviation industry the usage of Data Matrix (also known as dot matrix) is currently the standard. An aircraft engine 100 manufacturer might use this coding on its engine components 1 and prescribes QR coding on packaging. The Data Matrix coding, although of an older generation, compared to QR coding, has distinct advantages when viewed against wear and tear resilience on engine components.

By capitalizing e.g. on today's modern day smartphone technology (scanning capability and apps), an aircraft engine manufacturer can capture the data at the source (in-service) on its engine components 1 as the current smartphone 10 or tablet computer 10 scanning capability can decode e.g. both Data Matrix and QR coding. Scanning the unique labelling code on each aircraft engine component 1 (or material logically coupled with it) means that a raft of information can either be provided or captured depending on what app is being used by the end consumer. This type of technology allows the engine manufacturer to capture live data each time an engine component 1 is handled - i.e. either through purchasing, shipping, inspection, tracking, removal and installation etc..

Each end user with a mobile device 10 will have a different app personalized to him / her to scan the aircraft engine component information I. The personalization allows e.g. that data is displayed or actions are suggested based on the personalization. Only individuals authorized by the manufacturer of the aircraft engine component 1 (e.g. after specialized training) will be issued with that app. This allows among other things that the certifications of responsible mechanics can be monitored. With a camera in the mobile device the maintenance job can be documented.

Being able to capture all such activities on a 24/7 basis generates Big Data from which it is possible to dramatically improve the efficiency across all its sectors of the supplier of the aircraft engine component 1 due to the fact that immediate capture of the "real time" data entry points can be evaluated. This in turn allows a very efficient control, steering and / or adjusting mechanism to be instated.

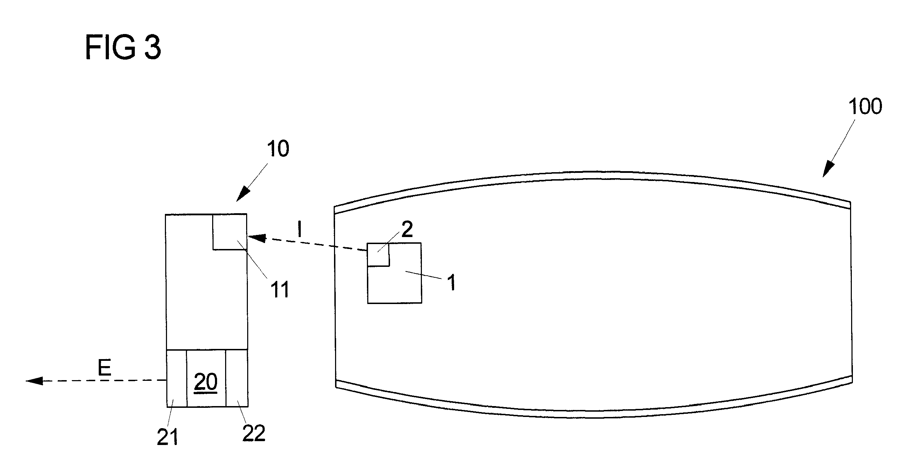

In a second step, the engine component information I is processed by a computer system 20 which is connected at least intermittently with the mobile device 10 and / or in a computer system 20 integrated with the mobile device 10. The computing system 20 is e.g. required to further process the engine component information I. In the embodiment shown in Fig. 1 the computer system 20 is a separate entity from the mobile device 10 and it is accessed through a wireless data transfer connection. In the embodiment described in Fig. 3 the computer system 20 is integrated with the mobile device 10.

In a third step, the computer system 20 identifies that the engine component 1 has actually been scanned based on the engine component information I and the computer system 20 automatically generates an event E in dependence of the engine component information I, in particular an order event E for the engine component 1. The event E can e.g. comprise some dataset comprising the identification of the engine component 1 itself, the number of replacement components, information if the engine component 1 was recently replaced (this having an impact on "No Fault Found" cases), information about the mobile device 10 and / or its user and / or location information about the engine component 1. This information can e.g. be used in an order event E, i.e. a notice to a supplier such as the engine manufacturer. The order event E can comprise also information about the planned recipient of the order and the location where the order should be shipped to.

In a fourth step, the computer system 20 automatically sends an information token T to the mobile device 10 in dependence of the generation of the event E, in particular a confirmation token T of an order event E. This information token T might comprise some information about the estimated time of arrival of the engine component 1 at the requested location. The user of the mobile device 10 receives a feedback that the event E has been successfully generated and sent.

Fig. 1 also describes a data processing system for aircraft engine maintenance data comprising the mobile device 10, in particular a smartphone or a tablet computer and the computer system 20. The computer system 20 comprises an event generation unit 21 for automatically generating the event E for the engine component 1 in dependence of the processing of the engine component information I.

Furthermore, the computer system 20 comprises an information token generation unit 22 for generating the information token T about the event E to be sent to the mobile device 10, in particular as a confirmation of the order event E.

The embodiment of the method and system has been described in context of one engine component 1 for sake of simplicity. It should be understood that the method and the system can be used for a plurality of engine components 1 at the same time. Often, maintenance jobs require the replacement and ordering of more than one engine component 1 at the same time. In this case, more than one event E will be generated to initiate e.g. an ordering process of the engine component. It is also possible that more than one mobile device 10 is used on one particular engine 100. In this case, the generation of the event E can be personalized to specific mechanics working on different parts of the engine 100. The data processing method and system described helps in simplifying complex maintenance jobs.

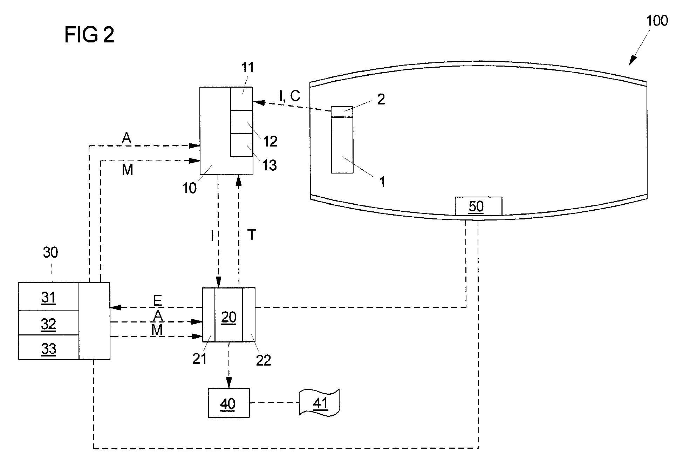

In Fig. 2 some further processing steps of the event E and implementations of the system are described. The embodiment shown in Fig. 2 is based on the embodiment described above in connection with Fig. 1 so that reference to the relevant description can be made.

After scanning the engine component information I with the mobile device 10, the computer system 20 can access a printer 40 to automatically print out a label 41 for a logistic service provider in case the engine component 1 needs to be returned e.g. to the manufacturer. It is also possible that the computer 20 system automatically notifies the logistic service provider about the transport request so that the part to be replaced will be automatically picked up at the location specified by the computer system 20. The logistic process can comprise
- Details of accompanying paperwork (e.g. JAR Form 1 & 8130 certificates)
- Material details (e.g. export control requirements)
- Weights and dimensions of the aircraft engine components 1
- Manufacturing code (e.g. with export control requirements)
- Customers ship to and pick up address details
- Customs declaration documents
- Live physical tracking data
- Displaying data of ship to addresses of pre-determined warehouse locations

The event E, e.g. a dataset or a string, can be received by a central computer system 30 which can be located far away from the location of the aircraft engine 100. This can e.g. be a computer system of a supplier or the manufacturer of the aircraft engine 100.

The central computer system 30 checks the availability of the engine component 1 and automatically sends availability and / or tracking data A to the computer system 20 and / or the mobile device 10. In particular, if the mobile device 10 is a smartphone the communication can directly be between the central computer 30 and the smartphone 10. In Fig. 2 both possibilities are shown. With this information the user of the mobile device 10 is informed about the status of the delivery of the engine component 1.

It is also possible that the central computer system 30 provides some maintenance data M to the mobile device 10 directly and / or via the computer system 20 coupled to the mobile device 10. The maintenance data M can e.g. comprise data from a manual which can show how to replace the engine component 1. This allows the full integration of manuals in an ergonomic fashion, i.e. end user is given correct information at the right time in the right format. This includes e.g. the visualization of a maintenance procedure in a 3D video.

It can also comprise warranty data. Since the event E identifies an engine component 1 the central computer system 30 can automatically determine the warranty status of the engine component 1 which might influence the billing status for that engine component 1.

In the following examples are given how the scanned aircraft engine component information I (or information derived thereof) can be used by the computer system 20 and / or the central computer system 30.
- In addition or alternatively to the warranty data other product information can be processed and in some instances be made available to the user of the mobile device 10, in particular the user of a smartphone or tablet computer.
- Information about the behavior of a fleet of aircraft engines 100 and / or a fleet of aircrafts can be derived from the scanned aircraft engine component information I. This data comprises e.g. the frequency how many times an engine component 1 has been removed and / or installed. This provides an instant feedback on reliability trend monitoring and provides data for fleet management. The hours spent on maintenance and / or maintenance cycles can be centrally logged and analyzed since the scanning can be used to indicate the start and end of a maintenance job. This information can be used to automatically generate key performance indices (KPI). It is also possible to use this information for statistic analysis (e.g. automatic generation of Weibull distribution graphs) in real time or at a later time. This includes also quality control data and / or the live tracking as to where aircraft engines 100 are operating, which aircraft engine 100 has been operated on in the past. The central computer system 30 will have the full curriculum of the aircraft engine 100 and its current and past owners.
- The information obtained by scanning aircraft engine component information I allows the automatic tracking of the physical components 1 (replaced and / or new ones). The data can be used to measure the performance of suppliers.
- The aircraft engine component information I can be used in an audit process, in e.g. assessing the performance of an operator in troubleshooting and / or the removal of the aircraft engine component 1. It can e.g. be determined which maintenance teams are removing aircraft engine components 1 at a higher rate than others at which airports. This could identify training opportunities for maintenance crews. This information allows an assessment of the overhaul process and / or the quality control process. The aircraft engine component information I provides also an immediate insight to previous damage write ups, modifications incorporated, repairs records concessions, refurbishment intervals, and workscope details. The systematic analysis of the gathered data helps in identifying issue apart from a particular replacement component, so that a better maintenance of the engine can be recommended.
- Since geographical information is instantly available due to the scanning of the aircraft engine component information I with the mobile device, further information might be gained by processing data related to weather and / or climatic conditions. When e.g. an aircraft engine 100 is predominantly operated in a dusty or humid environment, the system on the central computer system 30 knows about the conditions a certain aircraft engine component 1 has been operated. This can automatically influence the choice of a replacement engine component 1 which is particularly suited for that particular weather and / or the particular climate conditions.
- The aircraft engine component information I can provide data for the managing of the supply chain. So the times for reacting to requests, the punctuality of the service, in particular of deliveries, the conformance to contractual conditions, the automatic determination of contractual penalties or reimbursements can be determined and automatically used e.g. in the billing or supply chain management. The management of the supply chain might also include an automated and / or real time data input for the planning of spares based on scanned aircraft engine component information I. Parts more likely can be held in lager stock. The stock holding can also be influenced by projections about likely component failures so that the components will be available when the failure actually happens. This might include Line Replaceable Units.
- Sales campaign information can be displayed, which can e.g. provide reduced purchase prices, should an operator order a replacement component for sister engine in addition etc.. The pricing information generated and forwarded to the customer can be directly linked to the available supplies of that component.
- The mechanic in the field can launch some kind distress code if some aspect of the maintenance is not going according to plan. This enables the manufacturer to take appropriate steps.

All those listed items which can be applied individually or in combination, relate to the combination of the scanned aircraft engine component information I with other technical and / or commercial data available the central computer system 30. These are all processes (individually or in combination) which can be part of the supply chain of the aircraft engine component 1.

Mutatis mutandi those items can also be applicable to other engine systems 100 such as naval systems such as ship diesel engines, nuclear engines for ships or submarines, naval machinery (e.g. anchor winches and cranes), naval transmission systems (e.g. propellers, propulsion systems, bow thrusters). Non-naval engine systems can e.g. be a combustion engine, a wind power engine or a nuclear reactor. All these systems require maintenance and the replacement of engine components.

This technical and / or commercial data is in part gathered through the scanning of the aircraft engine component data I in the field. The combination of data, seemingly unrelated (e.g. maintenance frequencies, locations, weather conditions etc.) enables the automatic generation of actionable information for the maintainer of the central computer system 30 and / or the user of the mobile device 10.

Since smartphones or tablet computers 10 have built-in cameras the maintenance process can be enhanced for mechanics working in the field on an engine 100. In case there are questions, the engine component 1 can be identified visually (still photo, video, 3D technical publications) and the information can be relayed to a service person who can identify the relevant engine component 1 through the scanned component information I. Since smartphones and tablet computers 10 allow instant communication, the person in the field can easily communicate with the service person which might simplify the complete maintenance process. The smartphone or tablet computer 10 would be used for scanning, communicating and triggering the event E for the further processing. This would make dedicated maintenance mobile devices 10 redundant.

A further application can also include a better damage write-up. In addition to the scanning of the aircraft engine component information I, the scanning can provide full details on component physical dimensions and its damage assessment. This allows a correlation of the actual damage details and a scaling against known component dimensions. Therefore, remote damage assessment can be done purely based on in-service data (e.g. pictures taken) taken in the field. This can also be used for technician based on-site, capturing and supplying of damage details. The same set up of the mobile device 10 can accessed in a shop floor/ maintenance/repair facility environment.

Since the maintenance method extends to a mechanic in the field with her / his mobile device 10, it is possible to provide up-to-date information about installation and / or removal times of the engine component 1. This information can be important for scheduling the work in workshops. Due to the integration of the maintenance to the mechanic the actually needed installation and / or removal times can be gathered in the field by scanning the engine component 1 at the beginning of the maintenance job and at the end. If such data is gathered centrally, more accurate aircraft engine maintenance data can be developed over time. If the maintenance time in a particular instance is too long or too short, the reasons for the deviation might be important to evaluate. The scanning of the installed engine component 1 can also be used as personalized maintenance record.

Since a smartphone 10 or a tablet computer 10 provides a high quality display, a mechanic working on the aircraft engine 100 can see text and / or images assisting her / him to remove the engine component 1 from the engine 100 or to put it back into the engine 100.

If the mobile device 10 comprises a GPS unit 12, the geographical location of the mobile device 10 can be determined automatically. This information can be a part of the event E (i.e. the dataset associated with the event E) so that the central computer system 30 automatically knows from which location the request was made and to which location a delivery of the engine component 1 should be made. For this purpose the central computer system 30 has a database which matches geographical locations, e.g. to workshops or airports in the vicinity to the location data received from the GPS unit 12. With this location information the central computer system 30 can optimize the logistics in the delivery of the engine component. The objective function can be e.g. the fastest delivery time or the lowest cost. If e.g. several suppliers or storages stock the requested engine component 1, the central computer system 30 can automatically select the supplier or storage from which fastest delivery can be made. With the availability of different supply routes this does not necessarily have to be the closest supplier or storage. One further application could be that the central computer system 30 automatically determines the delivery of the engine component 1 with the smallest carbon footprint.

Having this information, the central computer system 30 can also feed information to a billing system 32 which is coupled with the central computer system 30. The billing information can be made available to the person using the mobile device 10, the owner of the engine 100 and / or the engine manufacturer in an efficient way. As mentioned above, since individual parts and their history are known to the central computer system 30, the warranty status and its associated cost can be automatically taken into account and updated. Integrating the billing further leads to a reduction in the reporting generated. Since the method and the system is fully integrated electronically, it can be managed in a paperless way.

This allows a effective cost management, including the automated generation of penalties on suppliers when not meeting contractual requirements, e.g. as soon as removed components do not meet contracted MTBUR (Mean time between unit replacement) rates.

The maintenance information M is also valuable for an engine fleet management and an engine health monitoring system 31 coupled to the central computer 30. If information about engine component 1 replacements are logged over some time and over a whole fleet of engines 100 statistical analysis of single engines 100 or the whole fleet of engines 100 becomes possible. One consequence of this is that the supply chain can be managed more efficiently, e.g. reducing the stockpile of the engine components 1 or concentrating the stockpile in a geographic region where the demand is expected to be higher.

The integration of engine health data and the associated predictions into the system helps in on-time delivery of engine components 1.

If one particular engine 100 has a statistically significant different maintenance pattern than the rest of the engine fleet, it might be possible to pin-point the reasons for this behavior. It is also possible that a particular engine component 1 might significantly prone to replacements. The information automatically gathered by the data processing system allows to analyze data which is inaccessible without it.

A further aspect of an embodiment is a link to an electronic logbook 50 of the engine 100 or the aircraft associated with the engine 100. If e.g. a particular engine component 1 is changed in the aircraft engine 100 all the necessary information about the removed engine component 1 and the replacement engine component 1 are automatically entered into the logbook 50. Manipulations would be difficult or impossible because there is closed and consistent data flow between the request initiated from the mobile device 10, the delivery of the engine component 1 and the replacement of the engine component 1 which is e.g. finalized by scanning the new part 1. All this information is logged in the electronic logbook 50. In the embodiment shown in Fig. 2, the relevant data can be supplied by the central computer system 30 and / or the computer system 20 coupled to the mobile device 10. Alternatively or in addition the logbook 50 can be e.g. stored in a cloud system.

With the integration of engine health monitoring, intelligent diagnostic capability, failure messages recorded by aircraft and the autogeneration of parts requirements by aircraft becomes possible. A given failure message will dictate when a given aircraft engine component 1 will have to be replaced and ordered without the intervention of humans

In Fig. 2 a further embodiment is described which enhance the accountability and the safety of the system. Here the engine component information I which is read from the information carrier 2 comprises code data C which can only be processed by specifically enabled mobile devices 10, e.g. by an app with which can decrypt some encrypted data in the code data C. For this purpose the mobile device 10 comprises a decoding unit 13.

It is understood that the features described in connection with Fig. 2 do not have to be present in each and every embodiment. It is possible to use any subset and combination of the features described herein.

In the embodiments described above the communication between the mobile device 10, the computer system 20 and the central computer system 30 can be done via wireless data transfer channels, such as Wi-Fi and / or phone connections. The communication can take place over the Internet and make use of one or more cloud computing systems. It is not required but possible that the central computer system 30 is one dedicated machine. It is possible that the central computer system 30 is a distributed computer system making e.g. use of cloud data processing and storage.

The data input and / or output on a smartphone 10 or a tablet computer 10 can take place through apps installed on the mobile device 10. By communication through apps, it is no longer necessary to distribute dedicate software for taking component orders or to maintain portals for taking component orders.

In Fig. 3, the embodiment described in Fig. 1 is modified in that sense that the computer system 20 is integrated with the mobile device 10. Since e.g. smartphones 10 become increasingly more powerful data processing devices, the generation of the event E and the generation of the information token I would take place within the mobile device 10. Such a system and method could be used in connection with one or more of the features described in Fig. 2.

The ergonomics of being able to scan an engine component 1 with a mobile device 10 and be presented with all of the pertinent data at the press of a button means that the customer is having to spend less time on all routine activities such as administration tasks, reporting tasks, spares ordering, quality regulations, manual consultation etc.. The improved ergonomics and the resulting overall time savings will lead to less time needed to service and / or maintain aircraft engines 100. The added benefit is that the customer gets a much more pleasant service experience. Furthermore, the ability to use "real time" data and using it to control/steer/adjust can be regarded as a strategic enabler.

The automation possible through the usage of e.g. QR/Data Matrix scanning technology allows the organization to manage all of its activities more lean and requires less energy to support routine activities. A further aspect is the fact that embodiments of the system and the methods will allow the manufacturers to rapidly grow its footprint globally - i.e. easier to contract and / or team up with other external parties as the data connection between all involved parties will take place via software on the mobile devices 10 (e.g. through supplied apps) and in particular the already existing smartphones 10 or tablet computers 10 owned by the various external parties.

The methods and system described above allow an integrated supply chain extending even to an individual mechanic working on the engine. Since working on aircraft engines 100 involves numerous personal qualification levels (e.g. licensed mechanics); it is easier to check on the correctness of the maintenance quality on every level. If e.g. a mechanic has completed the maintenance job, that job would be associated with her / his ID when scanning the built-in engine component 1 with her / his mobile device 10, in particular the smartphone 10. Again, using a smartphone 10 allows an efficient and personalized maintenance. Through the same system it is also possible to effectively give the supplier of the engine component 1 a feedback about the service. This information is valuable to be integrated in all the other data gathered in the business triggered by the event E.

The embodiments can also be used in the maintenance of other engine systems than an aircraft engine 100.

One possible applications are nuclear engines 100 which require stringent and regulated maintenance. In e.g. a nuclear submarine engine, the same principles would be applicable as mentioned in connection with the aircraft engine 100. In this context a regulatory system 33 would be coupled to the central computer system 30. This regulatory 33 would comprise data about required or recommended maintenance tasks together with their required timings. So if one maintenance task in a particular area is undertaken, the upcoming maintenance tasks stipulated by the regulatory rules could be recommended.

The same tasks as mentioned above would also apply e.g. to wind power engines and naval engine systems.

### List of reference numbers

- 1: aircraft engine component, engine component
- 2: information carrier, QR-Code

- 10: mobile device, smartphone, tablet computer
- 11: scanner device
- 12: GPS unit
- 13: decoding unit

- 20: computer system
- 21: event generating unit
- 22: information generating unit

- 30: central computer system
- 31: fleet management and / or engine health monitoring system
- 32: billing system
- 33: regulatory system

- 40: printer
- 41: transport label

- 50: logbook of aircraft / aircraft engine

- 100: aircraft engine, engine system

- A: availability and / or tracking data
- C: control data
- E: event
- I: engine component information
- M: maintenance data
- T: information token

## Claims

1. Method for automatic data processing in engine systems maintenance, in particular aircraft engine maintenance, comprising
a) scanning engine component information (I) from an information carrier (2) coupled to an engine component (1) with an image scanner device (11) of a mobile device (10), in particular a smartphone (10) or a tablet computer (10),
b) processing the engine component information (I) in a computer system (20) connected at least intermittently with the mobile device (10) and / or in a computer system (20) integrated with the mobile device (10),
c) automatically generating at least one event (E) in dependence of the engine component information (I), in particular at least one order event for the engine component (1) and
d) the computer system (20) automatically sending at least one an information token (T) to the mobile device (10) in dependence of the generation of the at least one event (E), in particular at least one confirmation token (T) of the at least one order event (E).

2. Method according to claim 1, wherein upon receiving the at least one event (E) a central computer system (30) checks the availability of the engine component (1) and automatically sends availability and / or tracking data (A) to the computer system (20) and / or the mobile device (10).

3. Method according to claim 1 or 2, wherein the central computer system (30) automatically sends maintenance data (M) to the computer system (20) and / or the mobile device (10), in particular about at least one engine component (1) depending on the engine component information (I) which might require replacement within a predetermined time period.

4. Method according to claim 2 or 3, wherein the availability and / or tracking data (A) and / or the maintenance data (M) is automatically generated and / or provided in dependence of the geographic location of the mobile device (10).

5. Method according to at least one of the preceding claims, wherein the information related to the at least one event (E) is automatically forwarded to a fleet management and / or engine health monitoring system (31), a regulatory system, a billing system (32) and / or is statistically processed in the central computer system (30).

6. Method according to at least one of the preceding claims, where in the information carrier (2) comprises a two-dimensional code, in particular a QR-Code or DataMatrix-Code, a RFID-transponder and / or a barcode.

7. Method according to at least one of the preceding claims, wherein the at least one event (E) automatically triggers the printing of a transport label (41) for transporting the engine component (1) to a predetermined location and / or automatically triggers a transport order of the engine component (1) to a predetermined location, in particular in dependence of a cost and / or route optimizer.

8. Method according to at least one of the preceding claims, wherein the at least one event (E) automatically triggers at least one process in the supply chain management for the engine component (1) and / or a statistical analysis, in particular by combining the scanned engine component information (I) with other technical and / or commercial data available in the central computer system (30), more in particular by gathering the technical and / or commercial data at least in part through the scanning of the engine component data (I).

9. Method according to at least one of the preceding claims, wherein the at least one event (E) automatically triggers an entry in a logbook (50) of the engine (100), in particular an aircraft and / or the aircraft engine (100), in particular with details about a defective engine component (1) and / or a replaced engine component (1).

10. Method according to at least one of the preceding claims, wherein the engine component information (I) is associated with code data (C) which can only be processed by an authorized scanner device (11) and / or mobile device (10).

11. Method according to at least one of the preceding claims, wherein the engine component information (I) is associated with a 3D-printing dataset and the generated at least one event (E) automatically triggers a 3D-printing process.

12. Method according to at least one of the preceding claims, wherein the engine system comprises a stationary gas turbine, a combustion engine, in particular a diesel engine of a ship or a locomotive, a wind power engine, a nuclear engine, in particular in a nuclear submarine, naval machinery, in particular anchor winches or cranes, or naval transmission systems, in particular propellers, propulsion systems and bow thrusters.

13. Data processing system for engine maintenance data, in particular aircraft engine maintenance, comprising
a) a mobile device (10), in particular a smartphone (10) or a tablet computer (10), with a scanner device (11) for scanning engine component information (I) from an information carrier (2) coupled to an engine component (1),
b) a computer system (20) for processing the engine component information (I), the computer system (20) connectable at least intermittently with the mobile device (10) and / or integrated with the mobile device (10),
c) an event generation unit (21) for automatically generating at least one event (E), in particular at least one order event for the engine component (1) in dependence of the processing of the engine component information (I) and
d) an information token generation unit (22) for generating at least one information token (T) about the at least one event (E) to be sent to the mobile device (10), in particular as a confirmation of the at least one order event (E).

14. Data processing system according to claim 13, wherein the mobile device (10) comprises a GPS unit (12) for geographically locating the mobile device (10).

15. Data processing system according to claim 14 or 15, wherein the central computer system (30) is coupled with a database handling maintenance data (M), a fleet management and engine health monitoring system (31), a billing system (32) and / or a database for statistically processing data related to events (E).

16. Data processing system according to at least one of the claims 13 to 15, the scanner device (11) and / or mobile device (10) comprise a decoding unit (13) to decode code data (C) associated with the engine component information (I).
